# EUROPÄISCHE PATENTSCHRIFT

(11) **EP 1 953 398 B1**
(45) Veröffentlichungstag und Bekanntmachung des Hinweises auf die Patenterteilung: **21.07.2010**
(21) Anmeldenummer: 07022618.8
(22) Anmeldetag: 21.11.2007
(51) Int. Cl.: F16B 37/06

(54) **Blindnietmutter oder -gewindebolzen**
Blind rivet nuts or blind stud bolts
Ecrou à sertir ou boulon fileté à sertir

(30) Priorität: 05.02.2007 DE 102007005626
(43) Veröffentlichungstag der Anmeldung: 06.08.2008
(73) Patentinhaber: Honsel Umformtechnik GmbH, 58730 Fröndenberg/Ruhr (DE)
(72) Erfinder: Sonntag, Günther, 58730 Fröndenberg (DE)
(74) Vertreter: Grünecker, Kinkeldey, Stockmair & Schwanhäusser Anwaltssozietät

(56) Entgegenhaltungen:
- DE-A1- 2 818 588
- DE-A1- 3 240 539
- GB-A- 2 310 904
- US-A- 2 763 314
- US-A- 3 797 358

## Beschreibung

Die Erfindung bezieht sich auf Blindnietmutter oder-gewindebolzen nach dem Oberbegriff des Anspruchs 1. Blindnietmutter dieser Gattung und z.B. aus den GB 2 310 904 A, DE 2 818 588 A, US 3 797 358 A, DE 3 240 539 A und US 2 763 314 A bekannt.

Aus der EPO 305 868 A ist eine Blindnietmutter bekannt, deren Bohrung in drei Abschnitte aufgeteilt ist. Der oberste Abschnitt ist zylinderförmig ausgestaltet und geht in einen kegelstumpfförmigen mittleren Abschnitt über. Am Fuße des kegelstumpfförmigen Abschnittes befindet sich ein Innengewindebereich. Der Klemmbereich dieser Blindnietmutter wird durch den kegelstumpfförmigen Mittenabschnitt festgelegt. Es ist nach Lehre dieser Druckschrift beabsichtigt, dass sich ein einziger Schließwulst immer am zur Verfügung stehenden dünnsten Wandungsbereich des Mittenbereiches, der unmittelbar aus dem Werkstück herausschaut bildet. Dadurch wird immer eine definierte Ausbildung eines Schließwulstes erreicht. Durch diese Technik können derartige Blindnietmuttern an Werkstücken angeordnet werden, die eine bestimmte Mindestdicke aufweisen und ungefähr um die Länge des Mittenbereiches in der Dicke variabel sein können. Ein Nachteil dieser Blindnietmutter besteht darin, dass bei dünneren Werkstücken der Gewindebereich im Wesentlichen genauso weit weg vom Kopf der Nietmutter entfernt angeordnet ist, wie bei dem dickstmöglich zu nietenden Werkstück. Hierdurch werden insbesondere bei dünnen Werkstücken unnötig lange Schrauben zur Befestigung benötigt.

Des Weiteren ist aus der DE 35 13 644 A1 eine Nietmutter bekannt, die ein mehrstufiges Gewinde aufweist. Darüber hinaus kann der Bohrungsabschnitt oberhalb der Gewinde konisch ausgeführt sein. Die mehrstufigen Gewindebereiche dienen nicht zur Ausformung eines Schließwulstes, sondern zur Bereitstellung mehrerer Anschraubmöglichkeiten. Auch hier wird durch die konische Ausbildung des oberen Bohrungsabschnittes das Befestigen an variablen Werkstückdicken ermöglicht.

Im Bereich der Blindniete ist es auch bekannt, Niethülsen mit mehreren in gleichen oder unterschiedlichen Abständen an der Außenseite der Niethülse sich befindlichen Ringnuten zu versehen, damit beim Setzvorgang sich je nach der Dicke des zu vernietenden Werkstücks ein oder mehrere Schließwülste ausbilden.

Es ist die Aufgabe der vorliegenden Erfindung eine Blindnietmutter oder - gewindebolzen der eingangs genannten Art bereitzustellen, die mittels einfacher konstruktiver Maßnahmen einen großen Werkstückdickenbereich abdeckt und den Gewindeabschnitt bzw. Schraubbolzenhalteabschnitt möglichst nahe am Werkstück positioniert.

Diese Aufgabe wird durch die Merkmale des Anspruchs 1 gelöst. Durch diese beanspruchte Ausgestaltung stellt jede Bohrungsstufe mindestens eine Möglichkeit zur Bildung eines Schließwulstes bereit. Bei extrem dünnen Werkstücken bilden sich somit mehrere Schließwulste aus, die durch den stärksten Schließwulst unmittelbar oberhalb des Innengewindeabschnitts oder Schraubbolzenhalteabschnitts in vorteilhafter Weise gegeneinander gepresst werden. Durch dieses ziehharmonikaartige Ausbilden von Schließwulsten kann ein sehr großer Werkstückdickenbereich mit einer und derselben Losgröße an Blindnietmutter oder -gewindebolzen abgedeckt werden. Das Besondere dieser Erfindung besteht auch darin, dass sich die Herstellungskosten bezüglich herkömmlicher Blindnietmuttern oder-gewindebolzen nicht verändern. Da durch die vorliegende Erfindung sich die Anzahl der Losgrößen drastisch reduzieren lässt, ergibt sich bei der Herstellungsart durch Fliesspressen sogar eine Reduzierung der Werkzeugkosten, da eine Vielzahl von Werkzeugsätzen für verschiedene Klemmbereichstypen entfallen. Bei der Herstellung einer gedrehten Blindnietmutter oder -gewindebolzen aus Vollmaterial wird die Stufenbohrung durch einen Stufenbohrer hergestellt, wodurch sich auch keine erhöhten Herstellungskosten ergeben. Darüber hinaus werden auch die Rüstzeiten verringert, da Umstellungen auf andere Losgrößen nur noch selten vorkommen. Es ergeben sich natürlich auch weitere Vorteile der Kostenseite, da die Lagerhaltungskosten und die Vertriebskosten sowohl beim Hersteller als auch beim Kunden reduziert werden. Ein weiterer Vorteil besteht darin, dass sich eine Erhöhung der Auszugskräfte ergibt, da durch die mehrfache Schließwulstbildung höhere Kräfte bei kleinen Klemmbereichen erreicht werden. Auch bei der Bedienung von Setzgeräten ergibt sich eine Vereinfachung, weil durch ein- und dieselbe Einstellung größere Klemmbereiche überbrückt werden können.

Als in aller Regel ausreichend hat sich eine Variante herausgestellt, bei der genau zwei zylindrische Bohrungsstufen zwischen Kopfseitigen Ende und Innengewindeabschnitt oder Schraubbolzenhalteabschnitt vorgesehen sind. Hierbei sind erfindungsgemäßdie Durchmesser und Längen der Bohrungsstufen derart ins Verhältnis gesetzt sein, dass die Niethülse im Bereich der größten Bohrungsstufe zumindest beim Setzvorgang ohne Werkstück ziehharmonikaförmig aneinander gereihte, insbesondere zwei, Schließwülste ausbildet. Es hat sich gezeigt, dass die dünnwandigste, obere Bohrungsstufe im Bereich, wo sie nicht mehr durch die Bohrungsinnenwand des Werkstückes abgestützt ist, mehrfach auffalten kann und ziehharmonikaförmig aneinandergereihte Schließwülste ausbildet. Demnach reicht es vollkommen aus, wenn die sich in diesem Bereich bildenden Schließwülste anschließend durch den Schließwulst der Bohrungsstufe mit dem dicksten Wandbereich nochmals verpresst werden. Es hat sich herausgestellt, dass auch dünnste Bleche als Werkstücke zum Einsatz der vorliegenden Erfindung herangezogen werden können. Aus Festigkeitsgründen ist es jedoch ratsam, Werkstücke oberhalb von 1 mm Dicke zu verwenden.

In einer vorteilhaften Weiterbildung kann die Länge der ersten, im Durchmesser größten Bohrungsstufe abzüglich der Höhe des Nietkopfes im Wesentlichen der maximalen Klemmlänge entsprechen. Diesem Umstand wird selbstverständlich am besten mit einer zweistufigen Ausgestaltung Rechnung getragen. Durch diese Tatsache lässt sich die maximale Klemmlänge auf einfachste Weise festlegen und es ist sehr leicht ersichtlich, dass hierdurch beträchtliche Dickenunterschiede der Werkstücke abgedeckt werden können.

In einer besonders vorteilhaften Ausführungsform kann die maximale Klemmlänge im Wesentlichen 40 bis 60% der Ausgangslänge der Niethülsenbohrung abzüglich der Länge des Innengewindeabschnitts oder Schraubbolzenhalteabschnitts betragen. Hierdurch zeigt sich besonders deutlich, dass selbst bei dünnen Werkstücken der Innengewindeabschnitt oder Schraubbolzenhalteabschnitt möglichst nahe an der Unterseite des Werkstückes angeordnet ist und somit z.B. übermäßig lange Schrauben vermeidbar sind.

Bei einer anderen Variante kann aber auch als Verdrehsicherung zumindest ein Abschnitt des unterhalb des Kopfes angeordneten Schaftbereiches der Niethülse im Wesentlichen einen Polygonquerschnitt, bevorzugt Sechskantquerschnitt, aufweisen.

Obwohl die äußere Gestalt der Niethülse zur Erzeugung der entsprechenden Wandstärkenunterschiede mit beitragen kann, ist es bevorzugt, wenn bei einer Ausführungsform zumindest der unterhalb des Kopfes angeordnete Schaftbereich der Niethülse im Wesentlichen zylindrisch ausgebildet ist. Dies vereinfacht insbesondere die Ausgestaltung der Öffnungen in den Werkstücken. Darüber hinaus spielt die Abstützung der Außenfläche der Niethülse an der Öffnungsinnenwand des Werkstückes beim Setzvorgang eine entscheidende Rolle und dieser muss Rechnung getragen werden.

Um eine gute Befestigung der Niethülse am Werkstück sicherzustellen, kann die Bohrungsstufe mit dem kleinsten Durchmesser eine Länge aufweisen, die zum Ausbilden eines abschließenden Schließwulstes selbst beim Ausnutzen der maximalen Klemmlänge ausreicht. Bei maximaler Klemmlänge übernimmt dieser Schließwulst die alleinige Befestigung der Niethülse, wohingegen dieser bei dünneren Werkstücken zum abschließenden Zusammenpressen der sich ausgebildeten Schließwülste dient. Durch die dickere Wandstärke dieses Schließwulstes lässt sich auch eine entsprechende größere Kraft durch diesen übertragen.

Das Längenverhältnis zwischen der größten und der im Durchmesser kleinsten Bohrungsstufe kann günstigsterweise im Bereich 1 bis 2 liegen. Des Weiteren reichen oftmals kleine Durchmesserunterschiede zur Ausbildung der Bohrungsstufen aus, weshalb das Durchmesserverhältnis zwischen der größten und dem Durchmesser kleinsten Bohrungsstufe im Bereich 1 bis 1,25 liegen kann.

Im folgenden werden Ausführungsformen der vorliegenden Erfindung anhand einer Zeichnung näher erläutert. Es zeigt:
- Fig. 1: eine erfindungsgemäße Blindnietmutter im Vollschnitt,
- Fig. 2: die Nietmutter aus Figur 1 im vollständig gesetzten Zustand,
- Fig. 3: die Nietmutter aus Figur 1 in einem Werkstück mittlerer Dicke gesetzt,
- Fig. 4: die Nietmutter aus Figur 1 bei Ausnutzung des maximalen Klemmbereiches und
- Fig. 5: eine erfindungsgemäße Blindnietgewindebolzen.

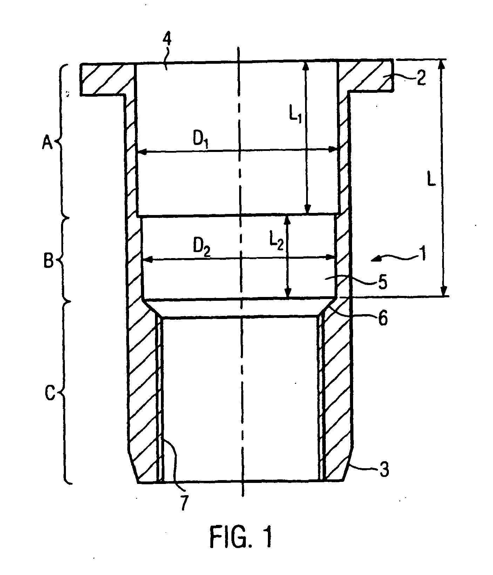

Die in Figur 1 dargestellte Blindnietmutter umfasst eine Niethülse 1 mit zylindrischer Außenform, wobei an einem Ende ein ringförmig umlaufender, flanschartiger Kopf 2 und am anderen Ende als Einführhilfe eine Fase 3 angeordnet ist. Die Bohrung der Niethülse 1 ist in drei Bereiche A, B und C unterteilt. Die Bereiche A und B stellen zwei zylindrische Bohrungsstufen 4 und 5 von unterschiedlichem Durchmesser D1 und D2 dar. Der Bereich C wird einschließlich einer Übergangsfase 6 von einem Innengewindeabschnitt 7 gebildet. Üblicherweise ist der Innengewindeabschnitt 7 gehärtet, wohingegen die Bohrungsstufen 4, 5 geglüht sind.

Durch die zylindrische Ausgestaltung der Niethülse 1 und der Bohrungsstufen 4, 5 ergeben sich unterschiedliche Wandstärken, wodurch unterschiedliche Schließwulstbildungseigenschaften bereitgestellt sind.

Das Längenverhältnis der Länge L₁ der Bohrungsstufe 4 zur Länge L₂ der Bohrungsstufe 5 liegt bevorzugt im Bereich 1 bis 2 und in der dargestellten Ausführungsform bei 1, 8. Das Durchmesserverhältnis der Durchmesser D1 und D2 der Bohrungsstufe 4 und 5 liegt im Bereich 1 bis 1,25 und im dargestellten Ausführungsbeispiel bei 1,04.

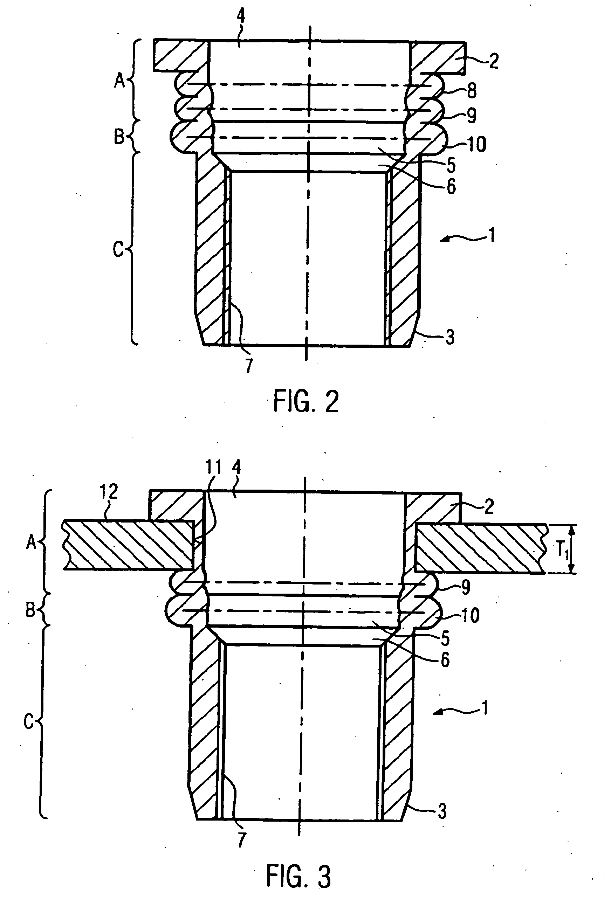

Im Folgenden wird die Wirkungs- und Funktionsweise der in Figur 1 dargestellten Ausführungsform unter Zuhilfenahme der Figuren 2 bis 4 näher erläutert.

In Figur 2 ist das Setzverhalten der Niethülse 1 dargestellt, wie es beim Setzen ohne Werkstück aussehen würde.

Dort ist gut zu erkennen, dass sich drei Schließwülste 8, 9 und 10 ausbilden. Des Weiteren ist auch festzustellen, dass der oberste Schließwulst 8 unmittelbar unterhalb des Kopfes 2 anliegt, wodurch selbst dünnwandige Werkstücke mit der erfindungsgemäßen Blindnietmutter verbunden werden können. Ein weiteres Phänomen stellt die ziehharmonikaförmige zu zwei Schließwülsten 8 und 9 sich auffaltende Wandung der Bohrungsstufe 4 dar. Diese Schließwülste 8 werden abschließend durch den dickwandigen Schließwulst 10 der kleineren Bohrungsstufe 5 nochmals zusammengedrückt, wodurch sich eine enge kraftschlüssige Anlage der Schließwülste 8, 9 und 10 aneinander ergibt.

Das Setzen der Blindnietmutter erfolgt in üblicher Weise mit einem dafür vorgesehenen Werkzeug, das einen entsprechenden Schraubzugdom aufweist. Die aufzuwendende Setzkraft wird durch den unteren Schließwulst 10 bestimmt, für den die größte Kraft erforderlich ist.

In Figur 3 ist eine Blindnietmutter dargestellt, die in eine entsprechende Öffnung 11 in einem Werkstück 12 eingesetzt ist. Das Werkstück weist eine Dicke T₁ auf, die der entsprechenden Klemmlänge der Niethülse 1 entspricht. Es ist gut zu erkennen, dass sich der obere Bereich der Bohrungsstufe 4 an der Innenwand der Öffnung 11 abstützt und sich aus diesem Grunde ein Schließwulst 9 erst unterhalb des Werkstückes 12 ausbildet. Da ebenfalls die Kraft ausreicht, den Schließwulst 10 auszuformen, ist der Innengewindeabschnitt 7 relativ nahe an das Werkstück 12 herangerückt.

Generell ist festzustellen, dass je dünner das Werkstück ist, desto vorteilhafter macht sich die Ausbildung mehrerer Schließwülste 8, 9 und 10 für die Stabilität der Verbindung bemerkbar.

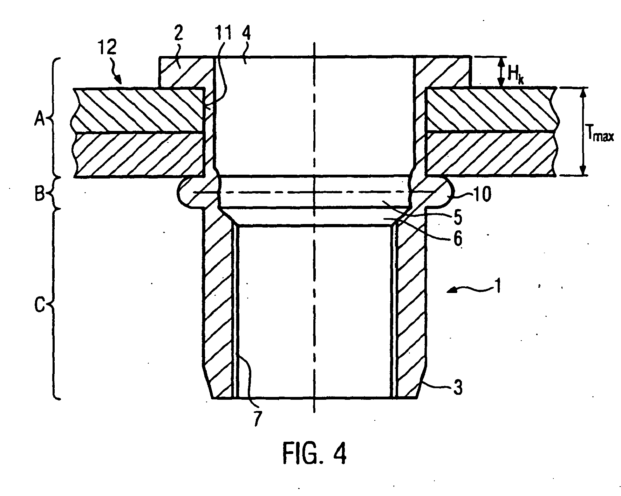

In der Figur 4 ist eine Niethülse 1 dargestellt, die in einem zweiteiligen Werkstück 12 von maximaler Dicke Tₘₐₓ oder maximaler Klemmlänge angebracht ist. Der Schließwulst 10 übernimmt nunmehr die alleinige Aufgabe des Festklemmens der Niethülse 1 am Werkstück 12. Im Wesentlichen die gesamte obere Bohrungsstufe 4 stützt sich nunmehr an der Innenfläche der Öffnung 11 im Werkstück 12 ab. Aus dieser Darstellung lässt sich leicht entnehmen, dass die maximale Klemmlänge Tₘₐₓ in etwa der Länge L₁ der Bohrungsstufe 4 abzüglich der Höhe H_{K} des Kopfes 2 entspricht.

Der Klemmbereich wird somit im Wesentlichen durch die Länge L₁ abzüglich der Kopfhöhe H_{K} vorgegeben. Die untere Bohrungsstufe 5 weist eine Länge L₂ derart auf, dass sich ein ausreichender Schließwulst 10 zu entsprechend festen Anbringungen der Niethülse 1 im Werkstück 12 ausbilden lässt. Gemäß der Figur 4 stützt sich dort der gesamte Wandungsbereich der Bohrungsstufe 4 an der Innenfläche der Öffnung 11 ab, so dass sich in diesem Bereich kein Schließwulst bildet.

Die maximale Klemmlänge Tₘₐₓ entspricht im Wesentlichen 40 bis 60% der Ausgangslänge L der Niethülsenbohrung ohne Innengewindeabschnitt T. Die Ausgangslänge L addiert sich auch aus den Längen L₁ und L₂ der Bohrungsstufen 4, 5.

Aus den Figuren 1 bis 4 ergibt sich, dass sich durch eine Blindnietmutter gemäß der vorliegenden Erfindung ein erstaunlich großer Klemmlängenbereich mit der maximalen Klemmlänge Tₘₐₓ bereitstellen lässt. Insbesondere durch die ziehharmonikaartige Ausformung der Schließwülste 8 und 9 der oberen Bohrungsstufe 4 lässt sich bei dünnwandigen Werkstücken 12 eine extrem feste und haltbare Verbindung bereitstellen.

Die Überbrückung von maximalen Klemmlängen Tₘₐₓ von 10 mm und mehr stellen kein Problem dar. Des Weiteren ist die Ausbildung mehrerer Schließwülste bei Blindnietmuttem bisher völlig unbekannt.

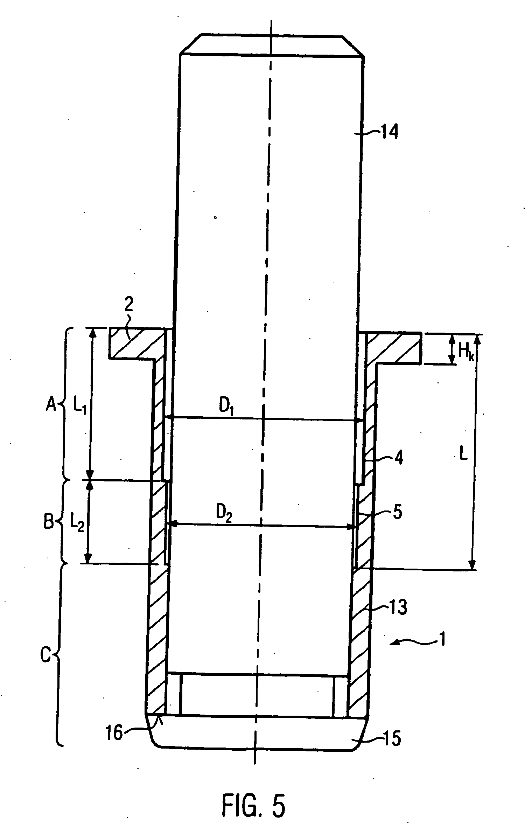

Im Folgenden wird anhand der Figur 5 ein gemäß der Erfindung ausgestalteter Blindnietgewindebolzen kurz erläutert. Für gleiche und ähnliche Bauteile im Hinblick auf das vorangegangene Ausführungsbeispiel werden, um Wiederholungen zu vermeiden, gleiche Bezugsziffern verwendet.

Die Niethülse 1 der Blindnietgewindebolzen unterscheidet sich lediglich durch den unteren Bohrungsabschnitt C. Der Bohrungsabschnitt C stellt in diesem Falle einen Schraubbolzenhalteabschnitt 13 dar. In der Niethülse 1 ist ein Schraubbolzen 14 eingesetzt, der im Schraubbolzenhalteabschnitt 13 verankert ist und sich an dem dem Kopf 2 abgewandten Ende der Niethülse 1 mittels eines Bolzenkopfes 15 an der Stirnseite 16 der Niethülse 1 abstützt.

Der Blindnietgewindebolzen wird in eine entsprechende Öffnung eines Werkstücks eingeführt und mit einem geeigneten Werkzeug wird eine Zugkraft an dem Schraubbolzen 14 aufgebracht. Der Bolzenkopf 15 drückt gegen die Stirnseite 16 der Niethülse 1, so dass sich in Anlehnung an das zuvor für die Blindnietmutter Beschriebene, abhängig von der Werkstückdicke im Bereich der Bohrungsstufe 4 und 5, ein entsprechender Schließwulst bzw. Schließwülste bilden können. Das Setzverhalten der Niethülse 1 der Blindnietgewindebolzen entspricht ansonsten der der Blindnietmutter.

## Patentansprüche

1. Blindnietmutter oder -gewindebolzen, mit einer einen flanschartigen Kopf (2) aufweisenden Niethülse (1), deren Bohrungsquerschnitt sich zwischen dem Kopf (2) und einem am dem Kopf (2) abgewandten Ende der Niethülse (1) angeordneten Innengewindeabschnitt (7) oder Schraubbolzenhalteabschnitt (13) verringert, wobei die Bohrungsquerschnittverringerung derart erfolgt, dass mindestens zwei im wesentlichen zylindrische Bohrungsstufen (4, 5) mit unterschiedlichen Durchmessern (D1, D2) zum Erzeugen von schrittweisen, unterschiedlichen Wandstärken der Niethülse (1) vorgesehen sind,
**dadurch gekennzeichnet,**
**dass** die Durchmesser (D1, D2) und Längen (L₁, L₂) der Bohrungsstufen (4, 5) derart ins Verhältnis gesetzt sind, dass die Niethülse (1) im Bereich der größten Bohrungsstufe (4) zumindest mit einem Setzvorgang ohne Werkstück ziehharmonikaförmig aneinandergereihte Schließwülste (8, 9) ausbildet.

2. Blindnietmutter oder -gewindebolzen nach Anspruch 1,
**dadurch gekennzeichnet,**
**dass** zwei Schließwülste (8, 9) ausbildbar sind.

3. Blindnietmutter oder -gewindebolzen nach Anspruch 1 oder 2,
**dadurch gekennzeichnet,**
**dass** genau zwei zylindrische Bohrungsstufen (4, 5) zwischen kopfseitigen Ende und Innnengewindeabschnitt (7) oder Schraubbolzenhalteabschnitt (13) vorgesehen sind.

4. Blindnietmutter oder -gewindebolzen nach wenigstens einem der Ansprüche 1 bis 3, **dadurch gekennzeichnet,**
**dass** die Länge (L₁) der ersten, im Durchmesser (T₁) größten Bohrungsstufe (4) abzüglich der Höhe (Hₖ) des Nietkopfes (2) im Wesentlichen der maximalen Klemmlänge (Tₘₐₓ) entspricht.

5. Blindnietmutter oder -gewindebolzen nach einem der Ansprüche 1 bis 3,
**dadurch gekennzeichnet,**
**dass** die maximale Klemmlänge (Tₘₐₓ) im Wesentlichen 40 bis 60% der Ausgangslänge (L) der Niethülsenbohrung abzüglich der Länge des Innengewineabschnitts (7) oder Schraubbolzenhalteabschnitts (13) beträgt.

6. Blindnietmutter oder -gewindebolzen nach einem der Ansprüche 1 bis 5,
**dadurch gekennzeichnet,**
**dass** zumindest der unterhalb des Kopfes (2) angeordnete Schaftbereich der Niethülse (1) im Wesentlichen zylindrisch ausgebildet ist.

7. Blindnietmutter oder -gewindebolzen nach einem der Ansprüche 1 bis 6,
**dadurch gekennzeichnet,**
**dass** zumindest ein Abschnitt des unterhalb des Kopfes (2) angeordneten Schaftbereiches der Niethülse (1) im Wesentlichen einen Sechskantquerschnitt aufweist.

8. Blindnietmutter oder -gewindebolzen nach einem der Ansprüche 1 bis 7,
**dadurch gekennzeichnet,**
**dass** die Bohrungsstufe (5) mit dem kleinsten Durchmesser (D2) eine Länge (L₂) aufweist, die zum Ausbilden eines abschließenden Schließwulstes (10) selbst beim Ausnutzen der maximalen Klemmlänge (Tₘₐₓ₎ ausreicht.

9. Blindnietmutter oder -gewindebolzen nach einem der Ansprüche 1 bis 8,
**dadurch gekennzeichnet,**
**dass** das Längenverhältnis der größten und der im Durchmesser kleinsten Bohrungsstufe (4, 5) im Bereich 1 bis 2 liegt.

10. Blindnietmutter oder -gewindebolzen nach einem der Ansprüche 1 bis 9,
**dadurch gekennzeichnet,**
**dass** das Durchmesserverhältnis zwischen der größten und im Durchmesser kleinsten Bohrungsstufe (4, 5) im Bereich 1 bis 1,25 liegt.

## Claims

1. Blind rivet nut or blind stud bolt having a rivet sleeve (1) which has a flange-like head (2) and the cross-section of whose bore decreases between the head (2) and an internal-thread section (7) or screw-bolt retaining section (13) arranged at that end of the rivet sleeve (1) which faces away from the head (2), wherein the reduction in the cross-section of the bore takes place in such a way that at least two substantially cylindrical bore stages (4, 5) having different diameters (D1, D2) are provided for the purpose of producing step-wise, different wall thicknesses of the rivet sleeve (1),
**characterised in that**
the diameters (D1, D2) and lengths (L₁, L₂) of the bore stages (4, 5) are correlated in such a way that, in the region of the largest bore stage (4), the rivet sleeve (1) constructs, at least by means of a setting operation without a tool, closing beads (8, 9) which are arranged in a row in a concertina-shaped manner.

2. Blind rivet nut or blind stud bolt according to claim 1,
**characterised in that**
two closing beads (8, 9) can be constructed.

3. Blind rivet nut or blind stud bolt according to claim 1 or 2,
**characterised in that**
precisely two cylindrical bore stages (4, 5) are provided between the end nearest the head and the internal-thread section (7) or screw-bolt retaining section (13).

4. Blind rivet nut or blind stud bolt according to at least one of claims 1 to 3,
**characterised in that**
the length (L₁) of the first bore stage (4) which is largest in diameter (T₁), minus the height (Hₖ) of the rivet head (2), substantially corresponds to the maximum clamping length (Tₘₐₓ).

5. Blind rivet nut or blind stud bolt according to one of claims 1 to 3,
**characterised in that**
the maximum clamping length (Tₘₐₓ) substantially amounts to 40 to 60% of the initial length (L) of the rivet-sleeve bore, minus the length of the internal-thread section (7) or screw-bolt retaining section (13).

6. Blind rivet nut or blind stud bolt according to one of claims 1 to 5
**characterised in that**
at least that shaft region of the rivet sleeve (1) which is arranged underneath the head (2) is of substantially cylindrical construction.

7. Blind rivet nut or blind stud bolt according to one of claims 1 to 6,
**characterised in that**
at least one section of that shaft region of the rivet sleeve (1) which is arranged underneath the head (2) has substantially a hexagonal cross-section.

8. Blind rivet nut or blind stud bolt according to one of claims 1 to 7,
**characterised in that**
the bore stage (5) having the smallest diameter (D2) has a length (L₂) which is sufficient for constructing a terminating closing bead (10) even when the maximum clamping length (Tₘₐₓ) is used.

9. Blind rivet nut or blind stud bolt according to one of claims 1 to 8,
**characterised in that**
the ratio of the lengths of the largest and, in diameter, smallest bore stages (4, 5) lies within the range 1 to 2.

10. Blind rivet nut or blind stud bolt according to one of claims 1 to 9,
**characterised in that**
the diametral ratio between the largest and, in diameter, smallest bore stages (4, 5) lies within the range 1 to 1.25.

## Revendications

1. Ecrou à sertir ou boulon fileté à sertir avec une douille rivetée (1) présentant une tête (2) de type bride, dont la section de perçage se réduit entre la tête (2) et une section à filetage intérieur (7) ou section de retenue de boulon fileté (13) disposée sur l'extrémité éloignée de la tête (2) de la douille rivetée (1), la réduction de section de perçage étant effectuée de telle sorte qu'au moins deux gradins de perçage (4, 5) essentiellement cylindriques avec des diamètres différents (D1, D2) sont prévus pour la génération d'épaisseurs de paroi différentes, graduées de la douille rivetée (1), **caractérisé en ce que** les diamètres (D1, D2) et les longueurs (L₁, L₂) des gradins de perçage (4, 5) sont mis en rapport de telle sorte que la douille rivetée (1) réalise dans la zone du plus grand gradin de perçage (4) au moins avec un processus d'installation à vide, des bourrelets de fermeture (8, 9) consécutifs sous forme de plis d'accordéon.

2. Ecrou à sertir ou boulon fileté à sertir selon la revendication 1, **caractérisé en ce que** deux bourrelets de fermeture (8, 9) peuvent être réalisés.

3. Ecrou à sertir ou boulon fileté à sertir selon la revendication 1 ou 2, **caractérisé en ce que** précisément deux gradins de perçage (4, 5) cylindriques sont prévus entre l'extrémité côté tête et la section à filetage intérieur (7) ou la section de retenue de boulon fileté (13).

4. Ecrou à sertir ou boulon fileté à sertir selon au moins l'une quelconque des revendications 1 à 3, **caractérisé en ce que** la longueur (L₁) du premier gradin de perçage (4) le plus grand en diamètre (T₁) moins la hauteur (Hₖ) de la tête rivetée (2) correspond essentiellement à la longueur de serrage (Tₘₐₓ) maximale.

5. Ecrou à sertir ou boulon fileté à sertir selon l'une quelconque des revendications 1 à 3, **caractérisé en ce que** la longueur de serrage (Tₘₐₓ) maximale s'élève essentiellement à 40 à 60 % de la longueur de départ (L) du perçage de la douille rivetée moins la longueur de la section à filetage intérieur (7) ou section de retenue de boulon fileté (13).

6. Ecrou à sertir ou boulon fileté à sertir selon l'une quelconque des revendications 1 à 5, **caractérisé en ce qu'**au moins la zone de tige de la douille rivetée (1) disposée au-dessous de la tête (2) est réalisée de manière essentiellement cylindrique.

7. Ecrou à sertir ou boulon fileté à sertir selon l'une quelconque des revendications 1 à 6, **caractérisé en ce qu'**au moins une section de la zone de tige de la douille rivetée (1) disposée au-dessous de la tête (2) présente essentiellement une section hexagonale.

8. Ecrou à sertir ou boulon fileté à sertir selon l'une quelconque des revendications 1 à 7, **caractérisé en ce que** le gradin de perçage (5) avec le plus petit diamètre (D2) présente une longueur (L₂) qui suffit pour la réalisation d'un bourrelet de fermeture (10) d'obturation même lors de l'utilisation de la longueur de serrage (Tₘₐₓ) maximale.

9. Ecrou à sertir ou boulon fileté à sertir selon l'une quelconque des revendications 1 à 8, **caractérisé en ce que** le rapport de longueur entre le gradin de perçage (4, 5) le plus grand et le plus petit en diamètre est compris dans la plage entre 1 et 2.

10. Ecrou à sertir ou boulon fileté à sertir selon l'une quelconque des revendications 1 à 9, **caractérisé en ce que** le rapport de diamètre entre le gradin de perçage (4, 5) le plus grand et le plus petit en diamètre est compris dans la plage entre 1 et 1,25.
